# EUROPEAN PATENT SPECIFICATION

(11) **EP 1 945 334 B1**
(45) Date of publication and mention of the grant of the patent: **22.12.2010**
(21) Application number: 06827028.9
(22) Date of filing: 27.10.2006
(51) Int. Cl.: B01D 65/02, B01D 61/22, B01D 65/08, C02F 3/12

(54) **EFFICIENT MBR OPERATION IN WASTEWATER TREATMENT**
EFFIZIENTER MBR-BETRIEB BEI DER ABWASSERBEHANDLUNG
FONCTIONNEMENT A GRAND RENDEMENT DE BIOREACTEURS A MEMBRANES DANS LE TRAITEMENT DES EAUX USEES

(30) Priority: 28.10.2005 US 261403
(43) Date of publication of application: 23.07.2008
(73) Proprietor: Eimco Water Technologies LLC, Salt Lake City, Utah 84120 (US)
(72) Inventor: LIVINGSTON, Dennis, Austin, TX 87859 (US); PORTEOUS, James, Austin, Texas 78735 (US); TELFER, James A., Austin, Texas 78737 (US)
(74) Representative: Hano, Christian
(86) International application number: PCT/US2006/042244
(87) International publication number: WO 2007/053528

(56) References cited:
- WO-A1-00/21890
- US-A- 5 048 552
- US-A- 5 354 455
- US-A- 5 863 476
- US-A- 2004 050 781
- US-B1- 6 325 928
- US-B2- 6 841 070

## Description

### Background of the Invention

This invention involves enhancement of a process already known and used in the sewage treatment industry. More specifically the enhancement relates to efficient operation of membrane separators which are increasingly used in sewage treatment plants for dewatering and concentration of sludge.

Membrane separators, often called membrane bioreactors or MBRs, are used in an increasing number of sewage treatment facilities because of their compactness and efficiency in removing a nearly-pure permeate from sludge or mixed liquor. The membrane separators require maintenance. They become partially clogged by accumulated solids separated out by the micropore filters of the membranes; air scouring, constant or intermittent, typically is used to agitate and loosen the accumulated solids from the surfaces of the membranes.

It is known that a procedure called relaxation improves the overall hydraulic performance of membranes submerged in mixed liquor. In simple terms relaxation is generally described as a procedure whereby filtration is suspended for a time but air scouring (cleaning) is continued. Relaxation removes solids that have accumulated at the membrane surface during filtration (dewatering).

In the literature, relaxation frequencies and duration are on the order of hours or minutes. The primary limitation is the effective derating of a plant that occurs as membranes are taken out of service more frequently or for longer periods of time to increase the benefits of relaxation.

Typical membrane bioreactor (MBR) wastewater treatment plants are designed to handle daily (diurnal) and seasonal variation in both hydraulic and waste loading. However, for design and operational purposes, such variations must fall within pre-defined limits and average daily flow rate (ADF) over each 24-hour cycle of operation further limited to minimize maintenance requirements and extend membrane service life.

Air scour in MBR-basins, as typically practiced in MBR basins using relaxation, is at a constant rate through the filtration and relaxation cycle, although in some cases air may have been cycled on and off during the filtration.

US 6325928-B and WO-00/21890-A discloses methods using enhanced aeration during relaxation periods. It is an object of the invention to greatly improve efficiency of operation of membrane separators, by controlling the scouring air flow rate and optionally enhancing the removal of accumulated solids from the membranes during relaxation, all of which reduces cost of operation and can also reduce capital cost.

### Summary of the Invention

In another aspect of the invention, air scour requirements are decreased through the use of proportional aeration. Air-scouring rates can be varied proportionally to match the permeate (filtrated water) flow rate. Current practice calls for constant aeration at any permeate flow rate and or what is referred to as air cycling. Air cycling is a patented method whereby valves are used to alternately feed the same air between two membranes units or cassettes operating in parallel. Air cycling subjects membranes to intense air scouring followed by equal periods of non-aeration. Using proportional aeration, filtration must be accompanied by some amount of aeration and the method of apportioning that aeration is not limited to a given apparatus.

Although aeration requirements are a function of numerous factors including equipment geometry and membrane properties, general practice requires operation at some minimum value, constant value. Below are quantifiable guidelines for establishing aeration requirements as a function of ADF:
- At or below 150% ADF, aeration can be reduced to 75% of what is now considered the minimum requirement.
- At fluxes above 150% ADF and up to 220% ADF, aeration should be increased to 100% of the current minimum requirement.
- At fluxes above 220% ADF, aeration should be increase up to 150% of the current minimum requirement.

Proportional aeration simply follows the particular need for flow rate of air scour based on the conditions of flux and loading against the MBRs. Air flow is not wasted when not needed. In contrast, current practice has been simply to keep air scour flow rate constant, without variation during filtration (except, as noted above, that the air has sometimes been switched on and off during filtration).

Pursuant to an aspect of this invention, filtration/relaxation cycles are much more frequent, and can be on the order of seconds rather than minutes. This can improve the benefits of relaxation without further derating plant performance if relative filtration/relaxation times are kept approximately constant. For example, a typical relaxation cycle (1 min. relax/9 min. filtration) effectively derates a plant by 10%. Relaxing for 10 seconds every 100 seconds should increase sustainable flow rate by removing accumulated solids more frequently and preventing buildup at the membrane surface.

Perceived limitations on the frequency of relaxation are controllability and valve wear. Controllability refers to the time it takes a valve to open or a pump to turn on and what happens to the flow after such action occurs. For example, electrically actuated permeate flow control valves (FCVs) generally have a throw time of 30 to 60 seconds. This means it takes up to 60 seconds for the valve to fully open or fully close from the opposite condition. Such a throw time limits how frequent relaxation can occur because time spent opening after each cycle further reduces plant throughput. In addition, if an FCV opens too fast, a phenomenon called overshoot can occur. During overshoot, the valve opens too far allowing filtration rates temporarily to spike. Spikes in filtration bring large amounts of solids to the membranes surface effectively undoing the benefits of relaxation. Constant opening and closing of valves during frequent relaxation also increases wear causing valves to fail and operating costs to increase.

This aspect of the invention encompasses two methods to address the concerns of controllability and wear. The first method involves adding a second, pneumatically actuated valve upstream of the FCV. The pneumatically operated valve opens and closes during relax while the FCV stays in the same position. Pneumatic valve throw times are on the order of 6-15 seconds. In this configuration, the FCV does not close during relaxation and overshoot is reduced after each relax cycle.

The second method and configuration is generally more cost effective and easier to operate. Similar to the method proposed above, inexpensive quarter turn valves (butterfly, ball, plug) are installed upstream of each FCV and operated using a camshaft connected to a motor. As the motor turns at an adjustable frequency, the cams open and close these isolation valves while the FCV stays in position to limit overshoot following each relax cycle. This method improves controllability and eliminates the need for actuators that can wear.

The drastic reduction in cycle lengths, i.e. the much more frequent relaxation of the membranes from filtration, while retaining a roughly similar ratio between total filtration time and total relaxation time, tends to remove accumulated solids from membrane surfaces in an overall more efficient scheme, not allowing clogging to proceed as far as with the typical longer relaxation cycling used previously, with the result that overall air requirements for a given permeate flow rate can be reduced, or, on the other hand, a greater flow rate can be achieved from a given total surface area of membrane separators.

Another aspect of the invention is to enhance efficiency in MBR operation through enhanced relaxation. During filtration air scour rates are reduced, but are at much higher flow rate during relaxation. The overall air scour flow is reduced. Typically, membranes are relaxed one minute every ten minutes to remove solids that have accumulated at the membrane surface. Using the proposed innovation, the air scour requirement would be reduced from 25%-50% during the nine-minute filtration cycle and increased to 100% or more of nominal flow for the one-minute relaxation cycle. The net decrease in aeration requirement would be approximately 22.5% assuming a 25% reduction in air during filtration. The actual benefit could be more depending on actual operating conditions.

It is therefore among the objects of the invention to improve efficiency in membrane separator operation achieving savings in overall air scour requirements and more efficient operation of the MBRs. These and other objects, advantages and features of the invention will be apparent from the following description of preferred embodiments, considered along with the accompanying drawings.

### Description of the Drawings

Figure 1 is a simple flow chart illustrating several aspects of the invention.
Figure 2 is a graph showing permeate flow as well as air scour as a function of time, illustrating the proportional air scouring method of the invention.
Figure 3 is a graph showing permeate flow and also air scour versus time, to illustrate an enhanced relaxation method for MBRs not in accordance with the invention.
Figure 4 is another graph showing permeate flow and air scour flow versus time, and illustrating a method with both proportional air scouring according to the invention and enhanced relaxation.
Figure 5 is a perspective view schematically showing a permeate effluent pipeline at an MBR system useful in certain aspects of the invention, with two different valves in series, one being a flow modulation valve to control the rate of flow and the other being a relaxation valve to shut off flow periodically for MBR relaxation.
Figure 6 is an enlarged view showing a portion of the apparatus in Figure 5.

### Description of Preferred Embodiments

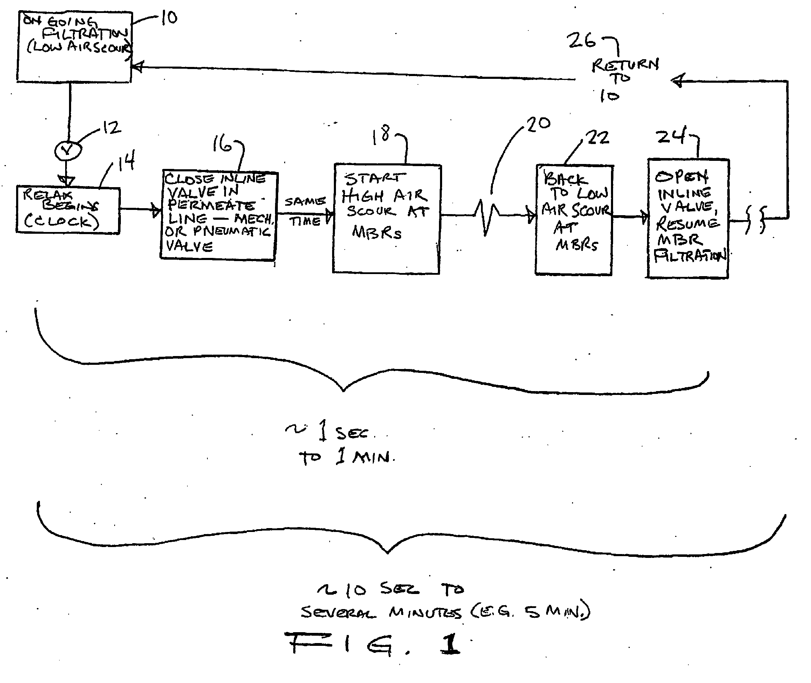

In the drawings, Figure 1 schematically shows two different aspects of the invention if combined with the method according to claim 1. These are enhanced relaxation, in which air scour rate is lowered during normal filtration/membrane separation and set at a higher rate during relaxation; and, in a second aspect, wherein the cycle of filtration and relaxation is greatly shortened, with relaxation occurring at a much higher frequency. In Figure 1 the block 10 indicates ongoing filtration, i.e. membrane separation, occurring at a low level of air scour. A flow modulation valve is schematically indicated at 12, representing prior art flow control valves which preferably retained pursuant to the invention.

The block 14 indicates initiation of a membrane relaxation cycle. The following block 16 denotes closing of an in-line valve, a valve additional to the flow control 12, in the liquid line, located preferably downstream of the MBRs and thus shutting off flow of effluent permeate. As indicated, this valve can be pneumatically or mechanically controlled. At the same time, the air scour rate is significantly raised, as noted in the block 18. The scour rate can be raised by about thirty percent, fifty percent, or even about one hundred percent.

A break 20 shown in the time line between the block 18 and the following block 22 represents the duration of time the high air scour is on and the inline valve is actually closed.

At 22 and 24, air scour is switched back to the low level and the inline valve is opened to resume MBR separation. After the prescribed filtration time, the system goes back to the relax cycle, as indicated at 26.

The drawing indicates that the total cycle of filtration/relaxation can be, for example, about ten seconds to several minutes, e.g. five minutes. The relaxation portion of the cycle can be, for example, about one second to about one minute, more preferably about one second to about ten seconds for short cycling. Total cycle times can be about 10 to 30 seconds, with about one to five seconds relaxation; or, for very short cycling, total cycle time of about 10 seconds, with about one second relaxation. This is about one or more orders of magnitude more frequent cycling than in the prior art, where the full cycle was typically measured in hours, and more recently, the assignee of this invention initiated shorter cycles of about ten minutes, about one minute of which was the relaxation cycle.

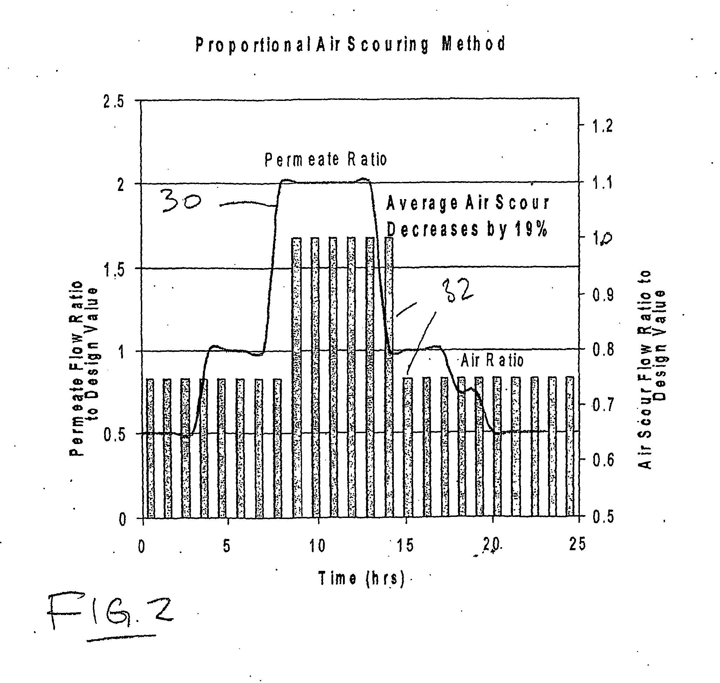

Figure 2 shows the invention : proportional air scouring. In the graph of Figure 2, a plot of permeate flow ratio and of air scour rate against time, the thin line 30 indicates permeate flow. In this graph the flow rate is expressed as a ratio, with 1.0 representing average daily flow or ADF. The X axis or horizontal axis is in hours, showing over one day's time, and indicating diurnal variations in permeate flow due to variations in influent wastewater to the MBR tanks. As the graph indicates, hourly flow rates can range from half the ADF up to twice the ADF design value. Air scour is shown in the hourly bars 32. The bars in the graph show a pattern pursuant to the invention. A normal, prior air scour rate is at the value 1.0 on the vertical axis, shown on the scale at the right side. This would be the air scour rate used constantly, regardless of diurnal variations, according to prior practice. However, by varying the air scour rate in accordance with diurnal changes in flow, the total amount of air delivered to the system, in the example shown in the graph, can be about nineteen percent less than the amount delivered under common prior practice. The bars 32 show that air scour rate can be about seventy-five percent of nominal rate (i.e. of the 1.0 rate) when diurnal flow is down to about fifty percent and when it is up to ADF value. In response to the permeate flow increasing, such as the doubling shown in the graph line 30, the air scour rate is increased greatly, in this example to the nominal 1.0 ratio (note that 1.0 could represent any base air scour value desired). The graph also shows that when the diurnal flow increase is over, the system responds by lowering the air ratio back to about seventy-five percent of nominal value, in this example.

Assuming a constant pressure on the blower that provides aeration, a nineteen percent reduction in volumetric flow rate equates to the same reduction in power costs.

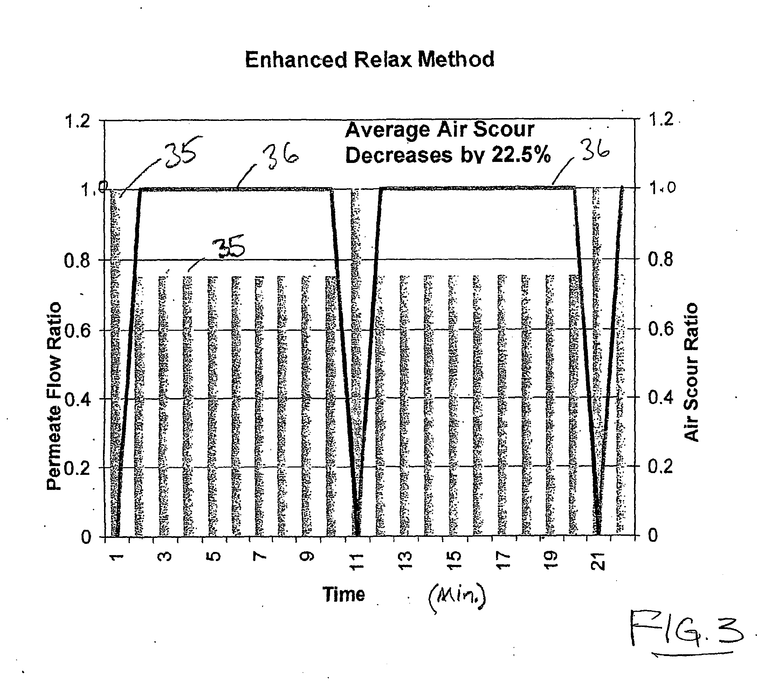

Figure 3 shows the enhanced MBR relax method not in accordance with the invention in graph form. This graph plots permeate flow ratio, as well as air scour ratio, against time in minutes. The flow ratio scale is on the left side vertical axis, while the air scour ratio is on the right side vertical axis. This can be combined with the higher frequency cycling which is shown in Figure 1 and discussed above.

In Figure 3 the bars 35 in the graph represent air scour ratio as compared to a nominal air scour flow rate of 1.0, as in the previous graph. A bar is shown for each minute of time. The solid line 36 is a plot of permeate flow ratio (as in the previous graph), as compared to a nominal 1.0 during the period of time covered by the graph.

Figure 3 shows one example, and in this example relaxation occurs one minute out of every ten minutes in a cycle, as indicated by the line plot 36. Instead of keeping air scour at a constant flow rate through a cycle of filtration/permeation and relaxation, this method adjusts air scour ratio to lower the rate or ratio considerably during normal filtration. In the example air scour ratio is lowered to about seventy percent of nominal during normal filtration. The long bars 35 that occur in one minute out of every ten show increase of air scour, to the 1.0 ratio, i.e. nominal flow rate. Thus, air scour flow is increased by about thirty-three percent in this example for the relaxation, where scouring caked particles off the membrane is most important.

These numbers are only examples. The air scour flow rate at relaxation might be as much as twice the air flow rate during filtration, or even more if desired. As discussed above, this method can greatly increase the efficiency of the MBR system, achieving better cleaning during relaxation and, again, saving on air scour and blower operation costs.

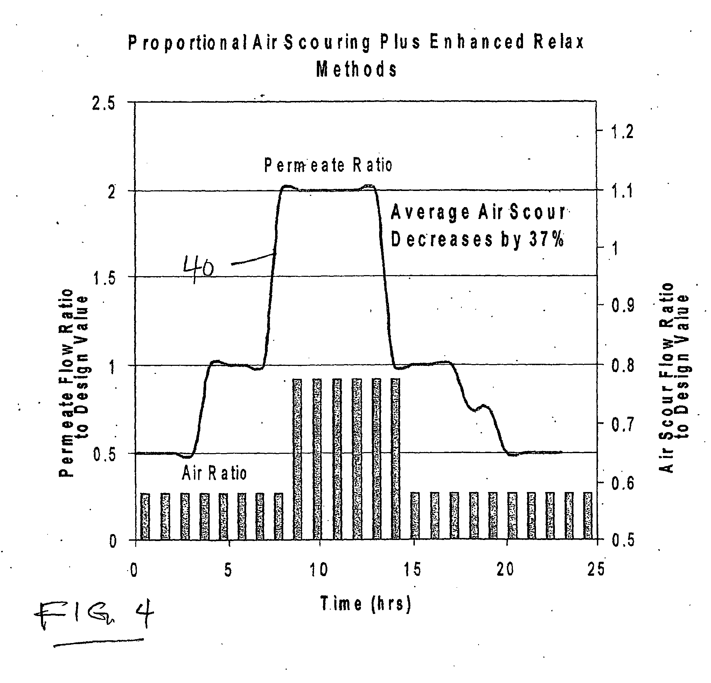

Figure 4 shows a combined method or system in accordance with the invention wherein the effects of Figures 2 and 3 are combined in a single graph. With the proportional air scouring responding to diurnal liquid flow changes, combined with the enhanced relax methods just discussed, the efficiency of the system can be even further improved. Here, the line plotting 40 shows the permeate ratio, with diurnal changes just as shown in Figure 2, over a period of about one day. However, the air scour ratio is greatly reduced by combining the effects of the two methods. Figure 4 indicates the expected efficiency of such combined system, which significantly improves the energy efficiency of any MBR system utilizing submerged membranes.

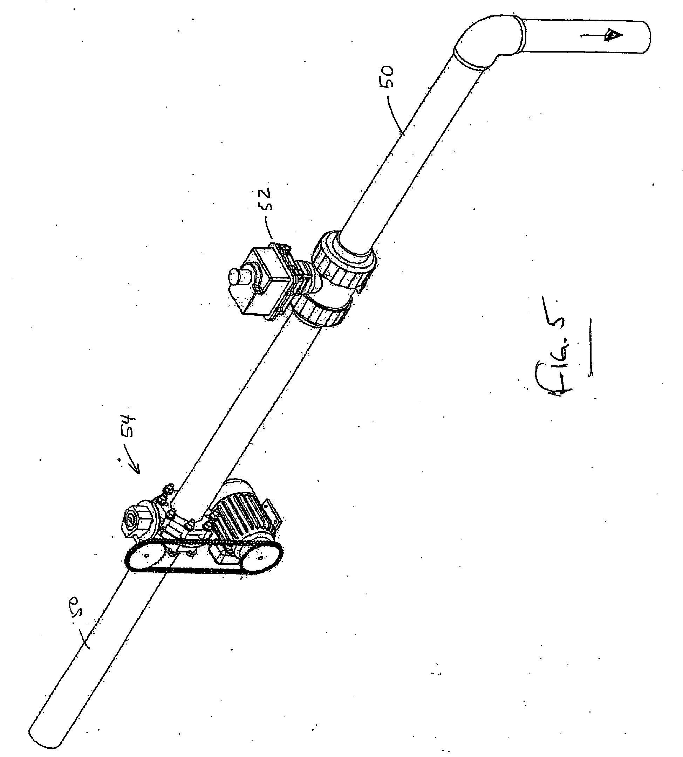

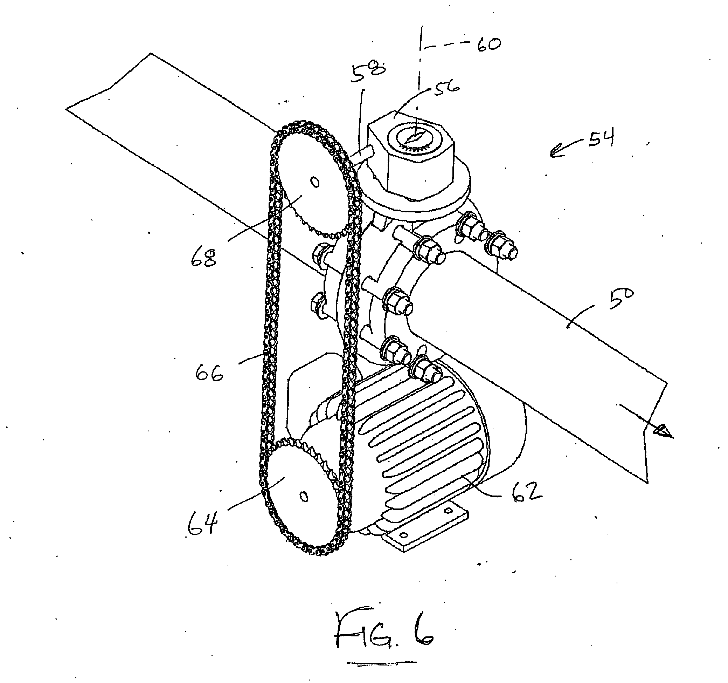

Figures 5 and 6 show one example of a valve arrangement useful for the system and method of aspects of the invention. These views show a permeate effluent pipe 50 downstream of the membrane separators in the system. A flow control valve (FCV) is shown in the line at 52, typical of prior art systems for modulating the flow rate of permeate and thus the rate at which the liquid passes through the membrane separators. The liquid flows through the membranes under pump or gravity pressure, and the flow control valve 52 modulates flow in accordance with system operating parameters.

As shown in Figures 5 and 6, an additional valve 54 is put in the line. As noted above, this valve is a simple gate valve shutoff, and can be a quarter-turn valve such a ball valve (with a hole that is either in line with the flow or at ninety degrees to the flow) or a glove valve or a butterfly-type valve, i.e. a plate that rotates to block flow or to be aligned with flow. The actual valve closure member is not shown, but the drawings indicate a worm gear arrangement at 56, by which rotation of a shaft 58, through the worm gear arrangement, rotates a shaft that is shown vertical in this particular orientation of the valve (the orientation could be otherwise), along a rotational axis 60. The valve stem operates to close or open the ball valve globe valve, butterfly valve or other appropriate type of in line gate valve.

In the arrangement shown, a motor 62, which may be geared down internally as needed, has a sprocket 64 engaged with a chain 66 that rotates another sprocket 68 when the valve has to be opened or closed. The sprocket 68 is connected to the worm gear shaft 58 discussed above. The sprockets 64 and 68 can be sized appropriately to achieve the desired speed of valve opening and closing. Also, the motor 62 preferably has variable frequency drive (VFD) responsive to a variable current control signal. For example, an appropriate duration for opening or closing the valve, would be about one second. This could be appropriate for a one second relaxation period, although faster opening/closing times could be used, or longer duration opening/closing especially for a longer relax period. Often field optimization will determine relax frequency and duration as well as valve cycle time.

By using a separate valve 54 (which could have another type of actuation, such as a pneumatically-driven valve), the function of the existing FCV 52 is not affected, and flow settings in the FCV are retained during periods of relaxation. The overshoot problem discussed above can be avoided by use of this separate valve because the separate valve need not reach a control set point when re-opened and the FCV will need little or no movement to reach the control point. Reducing overshoot reduces the frequency of needed maintenance cleaning, thereby increasing life of the membranes.

If air and permeate lines are conveniently located, the same controller used for the permeate valve 54 can be used to increase air rate for relaxation when the permeate valve is closed and vice versa. If pneumatic control is used, common control can be used for air and permeate flow switching regardless of pipe line locations.

The above described preferred embodiments are intended to illustrate the principles of the invention, but not to limit its scope. The scope of the invention is defined in the following claims.

## Claims

1. A method for reducing air requirements per unit of permeate in a sewage treatment process which includes membrane bioreactors for removing water permeate from a mixed liquor, and in which air scour is used during filtration and during relaxation periods when filtration is periodically suspended, the method comprising:
increasing and decreasing the air scour flow rate in approximate proportion to increases and decreases, respectively, in the flow rate of permeate through the membrane bioreactors.

2. The method according to claim 1, wherein relaxation occurs at least about one cycle per five minutes.

3. The method of claim 1, wherein each filtration/relaxation cycle is about one minute.

4. The method of claim 3, wherein relaxation time is about six seconds.

5. The method of claim 1, wherein each filtration/relaxation cycle is about ten seconds, about one second of which comprises relaxation.

6. The method of claim 1, wherein air scour flow rate during filtration is at least about twenty five percent less than during relaxation.

7. The method of claim 6, wherein air scour flow rate during filtration is at least about fifty percent less than during relaxation.

8. The method of claim 1, wherein each filtration/relaxation cycle is about ten to thirty seconds, about one to five seconds of which comprises relaxation.

## Patentansprüche

1. Verfahren zur Reduzierung des Luftbedarfs pro Permeateinheit in einem Abwasserbehandlungsprozess, der Membranbioreaktoren zur Entfernung von Wasserpermeat aus einer gemischten Flüssigkeit aufweist und bei dem während der Filtrierung und während Entspannungsperioden, wenn die Filtrierung periodisch ausgesetzt ist, eine Luftspülung verwendet wird, wobei das Verfahren umfasst:
- Erhöhen und Senken des Luftspülungsströmungsdurchsatzes in annähernd gleichem Verhältnis zu Erhöhungen bzw. Senkungen des Strömungsdurchsatzes des Permeats durch die Membranbioreaktoren.

2. Verfahren nach Anspruch 1, bei dem eine Entspannung über wenigstens etwa einen Zyklus pro fünf Minuten auftritt.

3. Verfahren nach Anspruch 1, bei dem jeder Filtrierungs-/Entspannungszyklus etwa eine Minute beträgt.

4. Verfahren nach Anspruch 3, bei dem die Entspannungszeit etwa sechs Sekunden beträgt.

5. Verfahren nach Anspruch 1, bei dem jeder Filtrierungs-/Entspannungszyklus etwa zehn Sekunden beträgt, wobei etwa eine Sekunde davon die Entspannung umfasst.

6. Verfahren nach Anspruch 1, bei dem der Luftspülungsströmungsdurchsatz während der Filtrierung wenigstens etwa fünfundzwanzig Prozent weniger beträgt als während der Entspannung.

7. Verfahren nach Anspruch 6, bei dem der Luftspülungsströmungsdurchsatz während der Filtrierung wenigstens etwa fünfzig Prozent weniger beträgt als während der Entspannung.

8. Verfahren nach Anspruch 1, bei dem jeder Filtrierungs-/Entspannungszyklus etwa zehn bis dreißig Sekunden beträgt, wobei etwa eine Sekunde bis fünf Sekunden davon die Entspannung umfasst/umfassen.

## Revendications

1. Procédé de réduction d'exigences en air par unité de perméat dans un procédé de traitement d'eaux usées qui inclut des bioréacteurs à membrane pour enlever un perméat d'eau d'une liqueur mixte, et dans lequel un lavage à l'air est utilisé pendant la filtration et pendant des périodes de relaxation dans lesquelles la filtration est périodiquement suspendue, le procédé comprenant :
l'augmentation et la diminution du débit de lavage à l'air en proportion approximative à des augmentations et des diminutions, respectivement, du débit de perméat à travers les bioréacteurs à membrane.

2. Procédé selon la revendication 1, dans lequel la relaxation se fait sur au moins environ un cycle toutes les cinq minutes.

3. Procédé selon la revendication 1, dans lequel chaque cycle de filtration/relaxation est d'environ une minute.

4. Procédé selon la revendication 3, dans lequel la durée de relaxation est d'environ six secondes.

5. Procédé selon la revendication 1, dans lequel chaque cycle de filtration/relaxation est d'environ dix secondes, environ une seconde desquels comprend la relaxation.

6. Procédé selon la revendication 1, dans lequel le débit de lavage à l'air pendant la filtration est d'au moins environ vingt-cinq pour cent inférieur à celui pendant la relaxation.

7. Procédé selon la revendication 6, dans lequel le débit de lavage à l'air pendant la filtration est d'au moins environ cinquante pour cent inférieur à celui pendant la relaxation.

8. Procédé selon la revendication 1, dans lequel chaque cycle de filtration/relaxation est d'environ dix à trente secondes, environ une à cinq secondes desquels comprennent la relaxation.
